# EUROPEAN PATENT SPECIFICATION

(11) **EP 3 992 852 B1**
(45) Date of publication and mention of the grant of the patent: **19.07.2023**
(21) Application number: 20204991.2
(22) Date of filing: 30.10.2020
(51) Int. Cl.: G06K 19/07

(54) **FINGERPRINT RECOGNITION CARD**
FINGERABDRUCKERKENNUNGSKARTE
CARTE DE RECONNAISSANCE D'EMPREINTES DIGITALES

(43) Date of publication of application: 04.05.2022
(73) Proprietor: Sisoul Co., Ltd., Gyeonggi-do 13487 (KR)
(72) Inventor: LEE, Wookyu, Incheon 22183 (KR); CHO, Wangee, Yongin-si, Gyeonggi-do 16902 (KR)
(74) Representative: RGTH

(56) References cited:
- WO-A2-2007/022423
- US-A1- 2013 207 786
- US-A1- 2019 236 321

## Description

### BACKGROUND

Embodiment of the inventive concept described herein relate to a fingerprint recognition card, and more particularly, relate to a fingerprint recognition card capable of performing authentication and security functions by recognizing a fingerprint of a user.

In general, a smart card may be mainly classified into a contact smart card and a contactless smart card.

The contact card, which receives power and a signal from a terminal through a physical contact, may be used for banking business and a credit card.

In addition, the contactless smart card, which is a card to transmit or receive data through a radio frequency (RF) scheme, may be used as a transportation card, for example, in a bus or a subway.

Such a smart card is applied to an identification system, and a card reader is mainly installed at entrances of a research center or other places requiring confidentiality, thereby allowing only a person having a regulated smart card to enter.

However, the identification system using such a smart card has a problem that, when the smart card is lost, a person having the lost smart card enters using without permission by using the lost smart card.

Accordingly, a fingerprint recognition card has been developed to perform biometrics authentication, such as fingerprint recognition, such that security authentication is enhanced.

In other words, an authentication processing algorithm of a convergence card, which is an existing fingerprint recognition card to make NFC module short range wireless communication together with fingerprint recognition, has been registered in Korean Patent Registration No. 10-1792002 (issued on October 25, 2017).

For example, US 2013/207786 A1 discloses the integration of a biometric sensors and security into passive secure data cards. WO 2007/022423 A2 relates to a biometric identity verification card system and method. US 2019/236321 A1 relates to voltage regulation within a device that receives power through contactless mechanisms. However, these prior art references do not disclose a fingerprint recognition card according to claim 1 of the present invention.

However, since the existing fingerprint recognition card additionally requires power or charging of power, the weight and the size of the fingerprint recognition card are increased to increase manufacturing cost. Accordingly, since the NFC reader has a shorter operating distance, when the distance to the NFC reader is long, an operation of authenticating a fingerprint may not be smoothly performed.

Accordingly, there has been required the development of a fingerprint recognition card capable of being manufactured with a light weight in a smaller size at lower cost such that the fingerprint recognition card is operated without additional power, and of increasing the operating distance thereof by optimizing power consumption efficiency, thereby enhancing a fingerprint authentication function.

### SUMMARY

Embodiments of the inventive concept provide a fingerprint recognition card capable of outputting power by generating an inductive current and reducing an input voltage to allow an operation without additional power, and of increasing an operating distance by optimizing power consumption efficiency to improve a fingerprint authentication function.

The technical problems to be solved by the inventive concept are not limited to the aforementioned problems, and any other technical problems not mentioned herein will be clearly understood from the following description by those skilled in the art to which the inventive concept pertains.

According to the present invention there is provided a fingerprint recognition card as defined in claim 1. Preferred features of the invention are defined in the dependent claims.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a block diagram illustrating a fingerprint recognition card, according to the inventive concept;
FIG. 2 is a circuit diagram illustrating a voltage reducing circuit unit of an inductive current generator of FIG. 1; and
FIG. 3 illustrates a waveform of a signal measured at a specific node of the voltage reducing circuit unit of FIG. 2.

### DETAILED DESCRIPTION

Hereinafter, the detailed embodiment of the inventive concept will be described with reference to accompanying drawings.

Suffixes of components, such as "module" and "unit", which are employed in the following description, are merely intended to facilitate description of the specification, and the term "module" and the term "unit" may be interchangeably used. For example, the term "module", and "unit" may be configured such that the functions thereof are implemented by at least one processor.

Further, although the embodiments of the inventive concept will be described in detail with reference to accompanying drawings and content described with reference to drawings, the inventive concept is not limited by the embodiments.

The terminology used in the present specification is a general terminology that is currently widely used while considering functions in the inventive concept, but this may vary according to the intention or custom of those skilled in the art or the appearance of a new technology. In addition, in specific cases, some terms are arbitrarily selected by applicant. In this case, their meaning will be described in the description of the relevant invention. Therefore, the terms used in the present specification should be interpreted based on the actual meaning of the terms and the contents throughout the whole specification, and not interpreted merely using names of the terms.

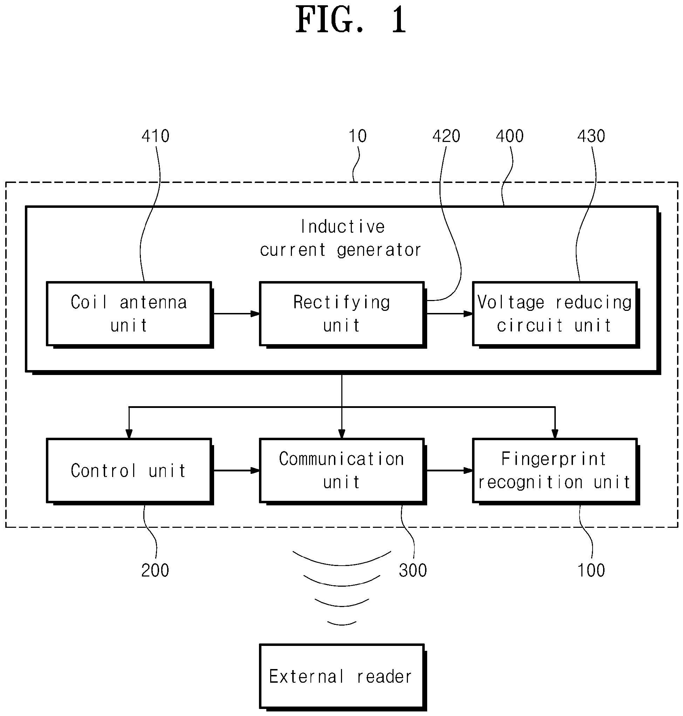

FIG. 1 is a block diagram illustrating a fingerprint recognition card, according to the inventive concept.

As illustrated in FIG. 1, according to the inventive concept, a fingerprint recognition card 10 includes a fingerprint recognition unit 100 to detect the fingerprint of a user, a control unit 200 to authenticate the registration of the detected fingerprint of the user, a communication unit 300 to perform tagging to an external reader depending on registration authentication of the control unit 200, and an inductive current generator 400 to generate an inductive current in response to approaching the external reader.

In this case, the inductive current generator 400 generates the inductive current when a distance to the external reader is within a specific distance, converts the generated inductive current to a direct current (DC), reduces an input voltage of the converted DC, and applies an output voltage generated by reducing the input voltage to the fingerprint recognition unit 100, the control unit 200, and the communication unit 300.

The inductive current generator 400 includes a coil antenna unit 410 to generate the inductive current in response to approaching the external reader, a rectifying unit 420 to convert the generated inductive current from an alternating current (AC) to a direct current, and a voltage reducing circuit unit 430 to reduce the input voltage generated from the converted DC and output the reduced voltage.

In this case, the coil antenna unit 410 may be disposed such that a coil is wound around the outermost edge of a card surface. This is because the greater size of the coil antenna unit 410 is advantageous when harvesting energy. Accordingly, it is advantageous that the coil is wound around the outermost edge of the card surface along the outermost edge.

The coil antenna unit 410 may have one coil turn to about five coil turns, but the inventive concept is not limited thereto. This is because that the smaller number of coil turns of the coil antenna unit 410 is advantageous when harvesting energy. Accordingly, it is advantageous that one coil turn to about five coil turns.

The voltage reducing circuit unit 430 may reduce the input voltage based on the maximum current consumption of the fingerprint recognition unit 100 and the control unit 200, and outputs the reduced voltage.

For example, the voltage reducing circuit unit 430 may be reduce the input voltage such that a current value, which is equal to or greater than the maximum current consumption of the fingerprint recognition unit 100 and the control unit 200, is applied to the fingerprint recognition unit 100 and the control unit 200.

This is because when the voltage reduced through the voltage reducing circuit unit 430 is applied to the fingerprint recognition unit 100 and the control unit 200, and when a current is supplied to satisfy the maximum current consumption of the fingerprint recognition unit 100 and the control unit 200, an operating distance is increased to improve the fingerprint recognition function.

Therefore, according to the inventive concept, since the inductive current generator 400 generates an inductive current even when the distance to the external reader is in the range of about 40 mm to about 60 mm to sufficiently supply power through energy harvesting, the operating distance is increased to improve the fingerprint recognition function.

For example, the inductive current generator 400 may generate the inductive current when the distance to the external reader is within about 60 mm.

The voltage reducing circuit unit 430 may be designed in various circuit forms to enhance the maximum power consumption efficiency of the fingerprint recognition unit 100 and the control unit 200.

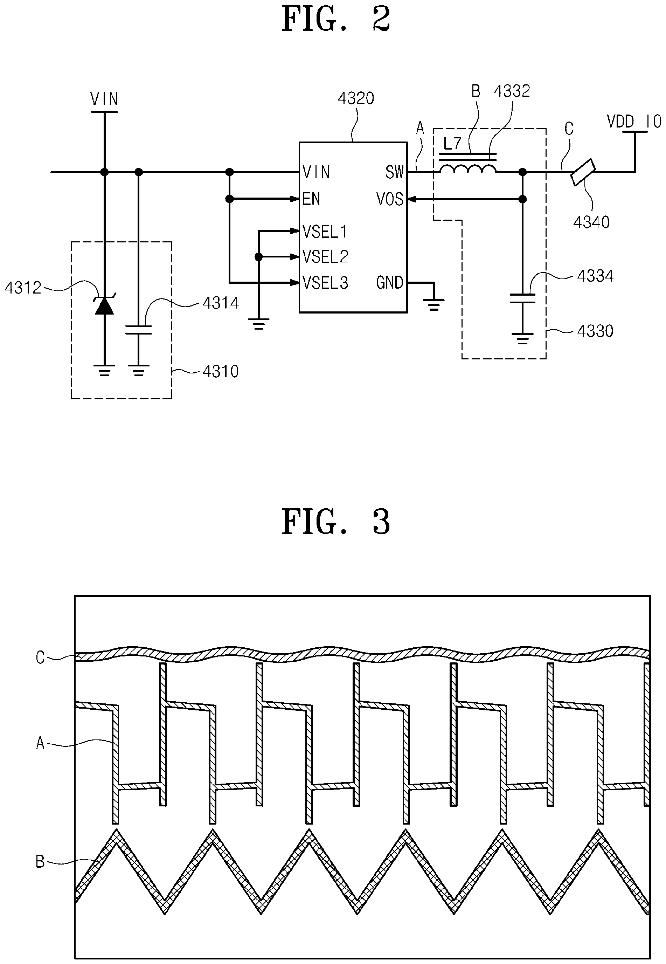

the voltage reducing circuit unit 430 includes a first signal converting unit (reference numeral 4320 of FIG. 2) to convert an input signal, which is input into a first input stage, to a pulse signal to be output and to maintain the amplitude of an output signal, which is output through conversion to the pulse signal, based on a feedback signal input into a second input stage, and a second signal converting unit (reference numeral 4330 of FIG. 2) to receive the pulse signal from the first signal converting unit, to convert the pulse signal to a smoothing signal to be output, and to feed back an output signal, which is output through conversion to the smoothing signal, to the second input stage of the first signal converting unit.

The first signal converting unit (reference numeral 4320 of FIG. 2) includes a pulse signal converter to convert the input signal to the pulse signal when the input signal is input into the first input stage, and to output the converted pulse signal to an output stage, and a comparator to compare the feedback signal with the input signal when the feedback signal is input into the second input stage and to maintain the amplitude of the output signal which is output to the output stage.

In addition, the second signal converting unit (reference numeral 4330 of FIG. 2) may include an inductor having one side connected to the output stage of the first signal converting unit (reference numeral 4320 of FIG. 2) and an opposite side connected to the second input stage of the first signal converting unit, and a capacitor having one side connected to the opposite side of the inductor and an opposite side which is grounded.

In addition, the voltage reducing circuit unit 430 further includes a constant voltage unit (reference numeral 4310 of FIG. 2) to maintain the input signal, which is input into the first input stage of the first signal converting unit (reference numeral 4320 of FIG. 2), to have a constant voltage.

The constant voltage unit includes a Zener diode having one side connected to the first input stage of the first signal converting unit and an opposite side which is grounded, and an input capacitor having one side, which is connected to a node, which is interposed between the first input stage of the first signal converting unit and the one side of the Zener diode, and an opposite side which is grounded.

In the constant voltage unit, the Zener diode and the input capacitor are parallel-connected to each other.

In addition, the voltage reducing circuit unit 430 may further include a ripple removing unit (reference numeral 4340 of FIG. 2) connected to the output stage of the second signal converting unit to remove a ripple of the output signal from the second signal converting unit.

For example, the ripple removing unit may include a ferrite bead, but the inventive concept is not limited thereto.

The communication unit 300 may include a short-range wireless communication module. For example, the short-range wireless communication module may include an NFC chip, but the inventive concept is not limited thereto.

The control unit 200 may determine whether the detected fingerprint is a registered fingerprint when the fingerprint is detected from the fingerprint recognition unit 100, and may control the communication unit 300 to perform tagging to the external reader, when the detected fingerprint is the registered fingerprint.

If necessary, the control unit 200 may control the communication unit 300 not to perform tagging to the external reader, when the detected fingerprint is not the registered fingerprint.

In addition, the control unit 200 may process any one of registration, matching, and deletion with respect to a fingerprint detected from the fingerprint recognition unit 100, when the fingerprint is detected from the fingerprint recognition unit 100.

Meanwhile, the external reader (reader) may be an NFC reader to generate an electromagnetic field, but the inventive concept is not limited thereto.

According to the fingerprint recognition card 10 having the configuration of the inventive concept, when the fingerprint recognition card 10 is close to the external reader, the inductive current generator 400 generates the inductive current,converts the generated inductive current to a DC current, reduces an input voltage of the converted DC current, and applies the reduced voltage (an output voltage) to the fingerprint recognition unit 100, the control unit 200, and the communication unit 300.

According to the inventive concept, the fingerprint recognition card 10 may operate the fingerprint recognition unit 100 and the control unit 200 by optimizing the power consumption efficiency of the fingerprint recognition unit 100 and the control unit 200.

In this case, the control unit 200 of the fingerprint recognition card 10 may determine whether the detected fingerprint is a registered fingerprint when the fingerprint is detected from the fingerprint recognition unit 100, and may control the communication unit 300 to perform tagging to the external reader, when the detected fingerprint is the registered fingerprint.

The external reader performs a corresponding function depending on user authentication, when is tagged with the communication unit 300 of the fingerprint recognition card 10.

For example, when the inventive concept is applied to a device to authenticate door security, a door may be open or closed depending on door authentication.

As described above, the inventive concept may provide an effect in which power may be output by generating the inductive current and reducing the input voltage to allow an operation without additional power, so the fingerprint recognition card may be manufactured at the lower cost, with light weight, in a smaller size, and the power consumption efficiency may be optimized to increase the operating distance, thereby improving the fingerprint authentication function.

FIG. 2 is a circuit diagram illustrating a voltage reducing circuit unit of an inductive current generator of FIG. 1, and FIG. 3 illustrates a waveform of a signal measured at a specific node of the voltage reducing circuit unit of FIG. 2.

As illustrated in FIG. 2, the voltage reducing circuit unit of inductive current generator includes a constant voltage unit 4310, a first signal converting unit 4320, a second signal converting unit 4330, and preferably a ripple removing unit 4340.

The constant voltage unit 4310 maintains an input signal, which is input into a first input stage 'VIN' of the first signal converting unit 4320, to have a constant voltage.

The constant voltage unit 4310 includes a Zener diode 4312 having one side connected to the first input stage 'VIN' of the first signal converting unit 4320 and an opposite side which is grounded, and an input capacitor 4314 having one side, which is connected to a node interposed between the first input stage 'VIN' of the first signal converting unit 4320 and the one side of the Zener diode 4312, and an opposite side which is grounded.

In the constant voltage unit 4310, the Zener diode 4312 and the input capacitor 4314 are parallel-connected to each other.

In addition, the first signal converting unit 4320 converts an input signal, which is input into a first input stage 'VIN' of the first signal converting unit 4320, to a pulse signal to be output and to maintain the amplitude of the output signal, which is output through conversion to the pulse signal by the first signal converting unit 4320, based on a feedback signal output from the second signal converting unit 4330 and input into a second input stage 'VOS' of the first signal converting unit 4320.

The first signal converting unit 4320 includes a pulse signal converter to convert the input signal to the pulse signal when the input signal is input into the first input stage 'VIN', and to output the converted pulse signal to an output stage 'SW', and a comparator to compare the feedback signal with the input signal when the feedback signal output from the second signal converting unit 4330 is input into the second input stage 'VOS' and to maintain the amplitude of a first output signal output to the output stage 'SW' of the first signal converting unit 4320.

The second signal converting unit 4330 may receive the converted pulse signal from the first signal converting unit 4320, to convert the pulse signal to a smoothing signal to be output, and to feed back a second output signal (feedback signal), which is output through conversion to the smoothing signal, to the first signal converting unit 4320.

For example, the second signal converting unit 4330 may include an inductor 4332 having one side connected to the output stage 'SW' of the first signal converting unit 4320 and an opposite side connected to the second input stage 'VOS' of the first signal converting unit 4320, and a capacitor 4334 having one side connected to the opposite side of the inductor 4332 and an opposite side which is grounded.

The ripple removing unit 4340 may be connected to the output stage of the second signal converting unit 4330 to remove a ripple of the output signal from the second signal converting unit 4330.

For example, the ripple removing unit 4340 may include a ferrite bead, but the inventive concept is not limited thereto.

As illustrated in FIG. 3, the voltage reducing circuit unit of the inductive current generator converts the input signal into a pulse signal 'A' by the first signal converting unit 4320.

In addition, the voltage reducing circuit unit may convert the pulse signal 'A' to a smoothing signal 'C' having a lowered amplitude by the second signal converting unit 4330.

As described above, the voltage reducing circuit unit may reduce an input voltage based on the maximum current consumption of the fingerprint recognition unit and the control unit and outputs the reduced voltage.

For example, the voltage reducing circuit unit may reduce the input voltage such that the current value equal to or greater than the maximum current consumption of the fingerprint recognition unit and the control unit is supplied to the fingerprint recognition unit and the control unit.

This is because when the voltage reduced through the voltage reducing circuit unit is applied to the fingerprint recognition unit and the control unit, the maximum current consumption efficiency of the fingerprint recognition unit and the control unit is increased to increase the operating distance, thereby improving the fingerprint recognition function.

According to the inventive concept, the fingerprint recognition card has following effects.

According to the inventive concept, power may be output by generating the inductive current and reducing the input voltage to allow an operation without additional power, so the fingerprint recognition card may be manufactured at the lower cost, with light weight, in a smaller size, and the power consumption efficiency may be optimized to increase the operating distance, thereby improving the fingerprint authentication function.

The additional range to which the inventive concept is applicable may be apparently understood from the following detailed description. It could be understood by those skilled in the art that various modifications fall into the technical scope of the inventive concept. Accordingly, it should be understood that the detailed description and specific embodiments, such as exemplary embodiments of the inventive concept, are provided only for the illustrative purpose.

The features, the structures, and the effects described in the inventive concept are included in at least one embodiment of the inventive concept, and not limited to only one embodiment. Further, the feature, the structure, and the effect illustrated in each embodiment are able to be combined with those of other embodiments or modified by those skilled in the art to which embodiments pertain. Accordingly, it should be interpreted that the combination and the modification fall into the technical scope of the inventive concept.

While the inventive concept has been described with reference to exemplary embodiments, it will be apparent to those skilled in the art that various changes and modifications may be made without departing from the scope of the inventive concept. Therefore, it should be understood that the above embodiments are not limiting, but illustrative. For example, components illustrated in the embodiment may be modified and reproduced.

## Claims

1. A fingerprint recognition card (10) comprising:
a fingerprint recognition unit (100) configured to detect a fingerprint of a user;
a control unit (200) configured to perform registration authentication for the detected fingerprint of the user;
a communication unit (300) configured to perform tagging to an external reader depending on the registration authentication of the control unit (200),
wherein the external reader is configured to perform a corresponding function depending on user authentication, when tagged with the communication unit (300); and
an inductive current generator (400) configured to generate an inductive current in response to approaching the external reader,
wherein the inductive current generator (400) includes:
a coil antenna unit (410) configured to generate the inductive current in response to approaching the external reader when a distance to the external reader is within a predetermined distance;
a rectifying unit (420) configured to convert the generated inductive current from an alternating current, AC, to a direct current, DC; and
a voltage reducing circuit unit (430) configured to generate a reduced output voltage (V_{DD}) by reducing an input voltage generated from the converted DC and to supply the reduced output voltage (V_{DD}) to the fingerprint recognition unit (100), the control unit (200), and the communication unit (300),
wherein the voltage reducing circuit unit (430) includes a first signal converting unit (4320) and a second signal converting unit (4330),
**characterized in that** the first signal converting unit (4320) includes a pulse signal converter configured to convert the DC signal from the rectifying unit (420), which is input to a first input stage (VIN) of the first signal converting unit (4320), to a converted pulse signal (A), and to output the converted pulse signal (A) to an output stage (SW) of the first signal converting unit (4320); and
a comparator configured to compare a feedback signal (C) input from the second
signal converting unit (4330), which is input to a second input stage (VOS) of the first signal converting unit (4320), with the DC signal from the rectifying unit (420) in order to maintain an amplitude of the converted pulse signal (A) output to the output stage (SW) based on the comparison,
wherein the voltage reducing circuit unit (430) further includes:
a constant voltage unit (4310) configured to maintain the DC signal, which is input to the first input stage (VIN) of the first signal converting unit (4320), to have a constant voltage,
wherein the constant voltage unit (4310) includes:
a Zener diode (4312) having one side connected to the first input stage (VIN) of the first signal converting unit (4320) and an opposite side which is grounded; and
an input capacitor (4314) having one side, which is connected to a node, which is interposed between the first input stage (VIN) of the first signal converting unit (4320) and the one side of the Zener diode (4312), and an opposite side which is grounded, and
wherein the Zener diode (4312) and the input capacitor (4314) are parallelconnected to each other between the first input stage (VIN) and a ground.

2. The fingerprint recognition card (10) of claim 1, wherein the coil antenna unit (410) includes a coil wound around an outermost edge of a card surface along the outermost edge.

3. The fingerprint recognition card (10) of claim 1,
wherein the second signal converting unit (4330) is configured to:
receive the converted pulse signal (A) from the first signal converting unit (4320), convert the converted pulse signal (A) to a converted smoothing signal (C), and
output the converted smoothing signal (C); and
feed back the feedback signal to the second input stage (VOS) of the first signal converting unit (4320), the feedback signal being a second output signal, the second output signal being the converted smoothing signal (C).

4. The fingerprint recognition card (10) of claim 1, wherein the second signal converting unit (4330) includes:
an inductor (4332) having one side connected to the output stage (SW) of the first signal converting unit (4320) and an opposite side connected to the second input stage, VOS, of the first signal converting unit (4320); and
a capacitor (4334) having one side connected to the opposite side of the inductor (4332) and an opposite side which is grounded.

5. The fingerprint recognition card (10) of claim 4, wherein the voltage reducing circuit unit (430) is configured to:
supply the reduced output voltage (V_{DD}), which is generated by reducing the input voltage, to the fingerprint recognition unit (100) and the control unit (200), wherein the voltage reducing circuit unit (430) is capable of supplying a current value equal to or greater than a maximum current consumption of the fingerprint recognition unit (100) and the control unit (200).

6. The fingerprint recognition card (10) of claim 1, wherein the voltage reducing circuit unit (430) further includes:
a ripple removing unit (4340) connected to an output stage of the second signal converting unit (4330) to remove a ripple of the second output signal which is output from the second signal converting unit (4330).

7. The fingerprint recognition card (10) of claim 6, wherein the ripple removing unit (4340) includes a ferrite bead.

8. The fingerprint recognition card (10) of claim 1, wherein the control unit (200) is configured to:
determine whether the detected fingerprint is a registered fingerprint when the fingerprint is detected from the fingerprint recognition unit (100); and
control the communication unit (300) to perform tagging to the external reader, when the detected fingerprint is the registered fingerprint, wherein the external reader is configured to perform a corresponding function depending on user authentication, when tagged with the communication unit (300).

## Patentansprüche

1. Fingerabdruckerkennungskarte (10), umfassend:
eine Fingerabdruckerkennungseinheit (100), die so konfiguriert ist, dass sie einen Fingerabdruck eines Benutzers erkennt;
eine Steuereinheit (200), die so konfiguriert ist, dass sie eine Registrierungsauthentifizierung für den erkannten Fingerabdruck des Benutzers durchführt;
eine Kommunikationseinheit (300), die so konfiguriert ist, dass sie ein Tagging an ein externes Lesegerät in Abhängigkeit von der Registrierungsauthentifizierung der Steuereinheit (200) durchführt,
wobei das externe Lesegerät so konfiguriert ist, dass es in Abhängigkeit von der Benutzerauthentifizierung eine entsprechende Funktion ausführt, wenn er mit der Kommunikationseinheit (300) getaggt ist; und
einen Induktionsstromgenerator (400), der so konfiguriert ist, dass er einen Induktionsstrom als Reaktion auf die Annäherung an das externe Lesegerät erzeugt,
wobei der Induktionsstromgenerator (400) Folgendes beinhaltet:
eine Spulenantenneneinheit (410), die so konfiguriert ist, dass sie den Induktionsstrom in Reaktion auf die Annäherung an das externe Lesegerät erzeugt, wenn ein Abstand zu dem externen Lesegerät innerhalb eines vorbestimmten Abstands liegt,
eine Gleichrichtereinheit (420), die so konfiguriert ist, dass sie den erzeugten Induktionsstrom von einem Wechselstrom, AC, in einen Gleichstrom, DC, umwandelt; und
eine Spannungsreduktionsschaltungseinheit (430), die so konfiguriert ist, dass sie eine reduzierte Ausgangsspannung (V_{DD}) erzeugt, indem sie eine aus dem umgewandelten Gleichstrom erzeugte Eingangsspannung reduziert und die reduzierte Ausgangsspannung (V_{DD}) der Fingerabdruckerkennungseinheit (100), der Steuereinheit (200) und der Kommunikationseinheit (300) zuführt,
wobei die Spannungsreduktionsschaltungseinheit (430) eine erste Signalumwandlungseinheit (4320) und eine zweite Signalumwandlungseinheit (4330) beinhaltet,
**dadurch gekennzeichnet, dass** die erste Signalumwandlungseinheit (4320) einen Impulssignalwandler beinhaltet, der so konfiguriert ist, dass er das Gleichstromsignal von der Gleichrichtereinheit (420), das in eine erste Eingangsstufe (VIN) der ersten Signalumwandlungseinheit (4320) eingegeben wird, in ein umgewandeltes Impulssignal (A) umwandelt, und das umgewandelte Impulssignal (A) an eine Ausgangsstufe (SW) der ersten Signalumwandlungseinheit (4320) ausgibt; und
einen Komparator, der so konfiguriert ist, dass er ein Rückkopplungssignal (C), das von der zweiten Signalumwandlungseinheit (4330) eingegeben wird, das in eine zweite Eingangsstufe (VOS) der ersten Signalumwandlungseinheit (4320) eingegeben wird, mit dem Gleichstromsignal von der Gleichrichtereinheit (420) vergleicht, um eine Amplitude des umgewandelten Impulssignals (A), das an die Ausgangsstufe (SW) basierend auf dem Vergleich ausgegeben wird, aufrechtzuerhalten,
wobei die Spannungsreduktionsschaltungseinheit (430) ferner Folgendes beinhaltet:
eine Konstantspannungseinheit (4310), die so konfiguriert ist, dass sie das Gleichstromsignal aufrechterhält, das in die erste Eingangsstufe (VIN) der ersten Signalumwandlungseinheit (4320) eingegeben wird, um eine konstante Spannung aufzuweisen,
wobei die Konstantspannungseinheit (4310) Folgendes beinhaltet:
eine Zenerdiode (4312) aufweisend eine Seite, die mit der ersten Eingangsstufe (VIN) der ersten Signalumwandlungseinheit (4320) verbunden ist, und eine gegenüberliegende Seite, die geerdet ist; und
einen Eingangskondensator (4314) aufweisend eine Seite, die mit einem Knoten verbunden ist, der zwischen der ersten Eingangsstufe (VIN) der ersten Signalumwandlungseinheit (4320) und der einen Seite der Zenerdiode (4312) angeordnet ist, und eine gegenüberliegende Seite, die geerdet ist und
wobei die Zenerdiode (4312) und der Eingangskondensator (4314) parallel zueinander zwischen der ersten Eingangsstufe (VIN) und einer Masse verbunden sind.

2. Fingerabdruckerkennungskarte (10) gemäß Anspruch 1, wobei die Spulenantenneneinheit (410) eine Spule beinhaltet, die um eine äußerste Kante einer Kartenoberfläche entlang der äußersten Kante gewickelt ist.

3. Fingerabdruckerkennungskarte (10) gemäß Anspruch 1,
wobei die zweite Signalumwandlungseinheit (4330) so konfiguriert ist, dass sie:
das umgewandelte Impulssignal (A) von der ersten Signalumwandlungseinheit (4320) empfängt, das umgewandelte Impulssignal (A) in ein umgewandeltes Glättungssignal (C) umwandelt, und das umgewandelte Glättungssignal (C) ausgibt; und
das Rückkopplungssignal an die zweite Eingangsstufe (VOS) der ersten Signalumwandlungseinheit (4320) rückkoppelt, wobei das Rückkopplungssignal ein zweites Ausgangssignal ist und das zweite Ausgangssignal das umgewandelte Glättungssignal (C) ist.

4. Fingerabdruckerkennungskarte (10) gemäß Anspruch 1, wobei die zweite Signalumwandlungseinheit (4330) Folgendes beinhaltet:
eine Induktionsspule (4332), aufweisend eine Seite, die mit der Ausgangsstufe (SW) der ersten Signalumwandlungseinheit (4320) verbunden ist, und eine gegenüberliegende Seite, die mit der zweiten Eingangsstufe, VOS, der ersten Signalumwandlungseinheit (4320) verbunden ist; und
einen Kondensator (4334), aufweisend eine Seite, die mit der gegenüberliegenden Seite der Induktionsspule (4332) verbunden ist, und eine gegenüberliegende Seite, die geerdet ist.

5. Fingerabdruckerkennungskarte (10) gemäß Anspruch 4, wobei die Spannungsreduktionsschaltungseinheit (430) so konfiguriert ist, dass sie:
die reduzierte Ausgangsspannung (V_{DD}), die durch Reduzierung der Eingangsspannung erzeugt wird, der Fingerabdruckerkennungseinheit (100) und der Steuereinheit (200) zuführt, wobei die Spannungsreduktionsschaltungseinheit (430) in der Lage ist, einen Stromwert zuzuführen, der gleich oder größer als ein maximaler Stromverbrauch der Fingerabdruckerkennungseinheit (100) und der Steuereinheit (200) ist.

6. Fingerabdruckerkennungskarte (10) gemäß Anspruch 1, wobei die Spannungsreduktionsschaltungseinheit (430) ferner Folgendes beinhaltet:
eine Welligkeitsentfernungseinheit (4340), die mit einer Ausgangsstufe der zweiten Signalumwandlungseinheit (4330) verbunden ist, um eine Welligkeit des zweiten Ausgangssignals zu entfernen, das von der zweiten Signalumwandlungseinheit (4330) ausgegeben wird.

7. Fingerabdruckerkennungskarte (10) gemäß Anspruch 6, wobei die Welligkeitsentfernungseinheit (4340) eine Ferritperle beinhaltet.

8. Fingerabdruckerkennungskarte (10) gemäß Anspruch 1, wobei die Steuereinheit (200) so konfiguriert ist, dass sie:
bestimmt, ob der erkannte Fingerabdruck ein registrierter Fingerabdruck ist, wenn der Fingerabdruck von der Fingerabdruckerkennungseinheit (100) erkannt wird; und
die Kommunikationseinheit (300) so steuert, dass sie ein Tagging an das externe Lesegerät durchführt, wenn der erkannte Fingerabdruck der registrierte Fingerabdruck ist, wobei das externe Lesegerät so konfiguriert ist, dass es eine entsprechende Funktion in Abhängigkeit der Benutzerauthentifizierung ausführt, wenn es mit der Kommunikationseinheit (300) getaggt ist.

## Revendications

1. Carte de reconnaissance d'empreinte digitale (10) comprenant :
une unité de reconnaissance d'empreinte digitale (100) configurée pour détecter une empreinte digitale d'un utilisateur;
une unité de commande (200) configurée pour réaliser une authentification d'enregistrement pour l'empreinte digitale détectée de l'utilisateur;
une unité de communication (300) configurée pour réaliser un marquage sur un lecteur externe en fonction de l'authentification d'enregistrement de l'unité de commande (200), dans laquelle le lecteur externe est configuré pour réaliser une fonction correspondante en fonction d'une authentification d'utilisateur, lorsqu'il est marqué avec l'unité de communication (300) ; et
un générateur de courant inductif (400) configuré pour générer un courant inductif en réponse à une approche du lecteur externe,
dans laquelle le générateur de courant inductif (400) inclut :
une unité d'antenne à bobine (410) configurée pour générer le courant inductif en réponse à une approche du lecteur externe lorsqu'une distance jusqu'au lecteur externe est à une distance prédéterminée ;
une unité de redressement (420) configurée pour convertir le courant inductif généré d'un courant alternatif, CA, en un courant continu, CC ; et
une unité de circuit de réduction de tension (430) configurée pour générer une tension de sortie réduite (V_{DD}) par la réduction d'une tension d'entrée générée à partir du CC converti et pour fournir la tension de sortie réduite (V_{DD}) à l'unité de reconnaissance d'empreinte digitale (100), à l'unité de commande (200), et à l'unité de communication (300),
dans laquelle l'unité de circuit de réduction de tension (430) inclut une première unité de conversion de signal (4320) et une deuxième unité de conversion de signal (4330),
**caractérisée en ce que** la première unité de conversion de signal (4320) inclut
un convertisseur de signal d'impulsion configuré pour convertir le signal CC provenant de l'unité de redressement (420), qui est entré dans un premier étage d'entrée (VIN) de la première unité de conversion de signal (4320), en un signal d'impulsion converti (A), et pour délivrer le signal d'impulsion converti (A) à un étage de sortie (SW) de la première unité de conversion de signal (4320) ; et
un comparateur configuré pour comparer un signal de retour (C) entré depuis la deuxième unité de conversion de signal (4330), qui est entré dans un deuxième étage d'entrée (VOS) de la première unité de conversion de signal (4320), au signal CC provenant de l'unité de redressement (420) afin de maintenir une amplitude du signal d'impulsion converti (A) délivré à l'étage de sortie (SW) sur la base de la comparaison,
dans laquelle l'unité de circuit de réduction de tension (430) inclut en outre :
une unité de tension constante (4310) configurée pour maintenir le signal CC, qui est entré au premier étage d'entrée (VIN) de la première unité de conversion de signal (4320), pour avoir une tension constante,
dans laquelle l'unité de tension constante (4310) inclut :
une diode Zener (4312) ayant un côté relié au premier étage d'entrée (VIN) de la première unité de conversion de signal (4320) et un côté opposé qui est mis à la masse ; et
un condensateur d'entrée (4314) ayant un côté, qui est relié à un noeud, qui est interposé entre le premier étage d'entrée (VIN) de la première unité de conversion de signal (4320) et le côté de la diode Zener (4312), et un côté opposé qui est mis à la masse, et
dans laquelle la diode Zener (4312) et le condensateur d'entrée (4314) sont reliés en parallèle l'un à l'autre entre le premier étage d'entrée (VIN) et une masse.

2. Carte de reconnaissance d'empreinte digitale (10) selon la revendication 1, dans laquelle l'unité d'antenne à bobine (410) inclut une bobine enroulée autour d'un bord le plus extérieur d'une surface de carte le long du bord le plus extérieur.

3. Carte de reconnaissance d'empreinte digitale (10) selon la revendication 1,
dans laquelle la deuxième unité de conversion de signal (4330) est configurée pour :
recevoir le signal d'impulsion converti (A) depuis la première unité de conversion de signal (4320), convertir le signal d'impulsion converti (A) en un signal de lissage converti (C), et
délivrer le signal de lissage converti (C) ; et
retourner le signal de retour au deuxième étage d'entrée (VOS) de la première unité de conversion de signal (4320), le signal de retour étant un deuxième signal de sortie, le deuxième signal de sortie étant le signal de lissage converti (C).

4. Carte de reconnaissance d'empreinte digitale (10) selon la revendication 1, dans laquelle la deuxième unité de conversion de signal (4330) inclut :
un inducteur (4332) ayant un côté relié à l'étage de sortie (SW) de la première unité de conversion de signal (4320) et un côté opposé relié au deuxième étage d'entrée, VOS, de la première unité de conversion de signal (4320) ; et
un condensateur (4334) ayant un côté relié au côté opposé de l'inducteur (4332) et un côté opposé qui est mis à la masse.

5. Carte de reconnaissance d'empreinte digitale (10) selon la revendication 4, dans laquelle l'unité de circuit de réduction de tension (430) est configurée pour :
fournir la tension de sortie réduite (V_{DD}), qui est générée par la réduction de la tension d'entrée, à l'unité de reconnaissance d'empreinte digitale (100) et à l'unité de commande (200), dans laquelle l'unité de circuit de réduction de tension (430) est capable de fournir une valeur de courant supérieure ou égale à une consommation de courant maximale de l'unité de reconnaissance d'empreinte digitale (100) et de l'unité de commande (200).

6. Carte de reconnaissance d'empreinte digitale (10) selon la revendication 1, dans laquelle l'unité de circuit de réduction de tension (430) inclut en outre :
une unité de suppression d'ondulation (4340) reliée à un étage de sortie de la deuxième unité de conversion de signal (4330) pour supprimer une ondulation du deuxième signal de sortie qui est délivré depuis la deuxième unité de conversion de signal (4330).

7. Carte de reconnaissance d'empreinte digitale (10) selon la revendication 6, dans laquelle l'unité de suppression d'ondulation (4340) inclut un noyau de ferrite.

8. Carte de reconnaissance d'empreinte digitale (10) selon la revendication 1, dans laquelle l'unité de commande (200) est configurée pour :
déterminer si l'empreinte digitale détectée est une empreinte digitale enregistrée lorsque l'empreinte digitale est détectée depuis l'unité de reconnaissance d'empreinte digitale (100) ; et
commander à l'unité de communication (300) de réaliser un marquage sur le lecteur externe, lorsque l'empreinte digitale détectée est l'empreinte digitale enregistrée, dans laquelle le lecteur externe est configuré pour réaliser une fonction correspondante en fonction d'une authentification d'utilisateur, lorsqu'il est marqué avec l'unité de communication (300).
